# EUROPEAN PATENT APPLICATION

(11) **EP 4 350 817 A1**
(43) Date of publication of application: **10.04.2024**
(21) Application number: 22810829.6
(22) Date of filing: 27.01.2022
(51) Int. Cl.: H01M 8/023, H01M 8/0232, H01M 8/0234, H01M 8/0239, H01M 8/0243, H01M 8/0245, H01M 8/18

(54) **CURRENT COLLECTOR STRUCTURE FOR REDOX FLOW BATTERIES, REDOX FLOW BATTERY CELL, AND REDOX FLOW BATTERY SYSTEM**

(30) Priority: 27.05.2021 JP 2021089491
(71) Applicant: SUMITOMO ELECTRIC INDUSTRIES, LTD., Osaka-shi, Osaka 541-0041 (JP)
(72) Inventor: NAKAISHI, Hiroyuki, Osaka-shi, Osaka 541-0041 (JP)
(74) Representative: Hoffmann Eitle
(86) International application number: PCT/JP2022/003056
(87) International publication number: WO 2022/249543

(57) **Abstract**

A current collecting structure for a redox flow battery comprises a conductive member, an interposed member, and a current collecting member sequentially stacked on one surface of a positive electrode or a negative electrode, wherein the interposed member is a porous body comprising a composite material comprising a first conductive material and a second conductive material, and the standard electrode potential of the first conductive material is closer to the standard electrode potential of the conductive member than the standard electrode potential of the current collecting member and the standard electrode potential of the second conductive material is closer to the standard electrode potential of the current collecting member than the standard electrode potential of the conductive member.

## Description

### TECHNICAL FIELD

The present disclosure relates to a current collecting structure for a redox flow battery, a redox flow battery cell, and a redox flow battery system. This application claims priority based on Japanese Patent Application No. 2021-089491 filed on May 27, 2021, the contents of which are incorporated herein by reference.

### BACKGROUND ART

PTLs 1 and 2 disclose a current collecting structure for a battery for inputting and outputting electricity between a battery cell of a redox flow battery and an external device. The current collecting structure comprises an end bipolar plate, a cushioning material, and a current collector plate sequentially stacked on one surface of a positive electrode or a negative electrode. PTL 1 describes that a metal layer comprising a layer of thermally sprayed tin is provided on that surface of the end bipolar plate facing the cushioning material and the cushioning material comprises a copper mesh. PTL 2 describes that a current collector plate covering layer comprising a layer of a carbon material is provided on that surface of the current collector plate facing the cushion material and the cushion material comprises a carbon material. Hereinafter, the end bipolar plate, the cushioning member and the current collector plate will be referred to as a conductive member, an interposed member, and a current collecting member, respectively.

### CITATION LIST

### PATENT LITERATURE

[PTL 1] Japanese Patent Laying-Open No. 2012-119288
[PTL 2] Japanese Patent Laying-Open No. 2015-079738

### SUMMARY OF INVENTION

The presently disclosed current collecting structure for a redox flow battery is:
a current collecting structure for a redox flow battery that comprises a conductive member, an interposed member, and a current collecting member sequentially stacked on one surface of a positive electrode or a negative electrode, wherein
the interposed member is a porous body comprising a composite material comprising a first conductive material and a second conductive material, and
the standard electrode potential of the first conductive material is closer to the standard electrode potential of the conductive member than the standard electrode potential of the current collecting member and
the standard electrode potential of the second conductive material is closer to the standard electrode potential of the current collecting member than the standard electrode potential of the conductive member.

The presently disclosed redox flow battery cell comprises
the presently disclosed current collecting structure for a redox flow battery.

The presently disclosed redox flow battery system comprises
the presently disclosed redox flow battery cell.

### BRIEF DESCRIPTION OF DRAWINGS

Fig. 1 is a schematic configuration diagram of a redox flow battery system according to an embodiment.
Fig. 2 is a schematic configuration diagram of a cell stack comprising a current collecting structure for a redox flow battery according to an embodiment.
Fig. 3 is a schematic configuration diagram showing an example of an interposed member that the current collecting structure for a redox flow battery according to an embodiment comprises.
Fig. 4 is a partially enlarged view of the interposed member shown in Fig. 3.
Fig. 5 is a partially enlarged view of a modified example of the interposed member shown in Fig. 3.
Fig. 6 is a schematic configuration diagram showing another example of the interposed member that the current collecting structure for a redox flow battery according to an embodiment comprises.
Fig. 7 is a schematic configuration diagram showing yet another example of the interposed member that the current collecting structure for a redox flow battery according to an embodiment comprises.
Fig. 8 is a schematic configuration diagram showing an example of a wire that the interposed member comprises that the current collecting structure for a redox flow battery according to an embodiment comprises.
Fig. 9 is a schematic cross section of another example of the wire that the interposed member comprises that the current collecting structure for a redox flow battery according to an embodiment comprises.

### DETAILED DESCRIPTION

### [Problems to be Solved by the Present Disclosure]

There is a need for a current collecting structure comprising an interposed member to suppress galvanic corrosion by a simple configuration even when moisture penetrates between a conductive member and a current collecting member.

An object of the present disclosure is to provide a current collecting structure for a redox flow battery that is capable of suppressing corrosion between a conductive member and a current collecting member by a simple configuration. Another object of the present disclosure is to provide a redox flow battery cell and a redox flow battery system capable of suppressing corrosion between a conductive member and a current collecting member by a simple configuration.

### [Advantageous Effects of the Present Disclosure]

The presently disclosed current collecting structure for a redox flow battery, redox flow battery cell, and redox flow battery system can suppress corrosion between a conductive member and a current collecting member by a simple configuration.

### [Description of Embodiments]

Initially, embodiments of the present disclosure will be described one by one.
(1) A current collecting structure for a redox flow battery according to one aspect of the present disclosure comprises:
   a current collecting structure for a redox flow battery that comprises a conductive member, an interposed member, and a current collecting member sequentially stacked on one surface of a positive electrode or a negative electrode, wherein
   the interposed member is a porous body comprising a composite material comprising a first conductive material and a second conductive material, and
   the standard electrode potential of the first conductive material is closer to the standard electrode potential of the conductive member than the standard electrode potential of the current collecting member and
   the standard electrode potential of the second conductive material is closer to the standard electrode potential of the current collecting member than the standard electrode potential of the conductive member.

The presently disclosed current collecting structure for a redox flow battery that comprises the interposed member comprising the first conductive material and the second conductive material each having a specific potential can suppress corrosion caused between the conductive member and the current collecting member. This is because corrosion hardly occurs between the first conductive material and the conductive member and corrosion hardly occurs between the second conductive material and the current collecting member and when this is compared with an interposed member comprising a single material of the first conductive material or the second conductive material the former can suppress galvanic corrosion more than the latter. For the presently disclosed current collecting structure for a redox flow battery, the conductive member and the current collecting member can be known such members. The presently disclosed current collecting structure for a redox flow battery can thus suppress corrosion between the conductive member and the current collecting member by a simple configuration.

In the presently disclosed current collecting structure for a redox flow battery, the interposed member provided between the conductive member and the current collecting member is a porous body. When the porous body is elastically deformable, electrical connection between the conductive member and the current collecting member can be satisfactorily ensured even if pressure inside a battery cell that the redox flow battery comprises varies. This is because even when pressure inside the battery cell varies and accordingly, a distance between the conductive member and the current collecting member varies, the interposed member deforms in response thereto.

(2) In the presently disclosed current collecting structure for a redox flow battery,
a major ingredient of a conductive material that the conductive member comprises may be carbon, and
a major ingredient of the current collecting member may be copper or nickel.

According to the configuration (2), practical materials are available as materials for the conductive member and the current collecting member.

(3) In the presently disclosed current collecting structure for a redox flow battery according to (2) above,
a major ingredient of the first conductive material may be carbon and
a major ingredient of the second conductive material may be copper or nickel.

The interposed member according to (3) has a small potential difference with respect to both the conductive member and the current collecting member. The interposed member according to (3) is excellent in conductivity. Therefore, according to the configuration (3), corrosion between the conductive member and the current collecting member can further be suppressed, and electrical connection between the conductive member and the current collecting member is easily, more satisfactorily ensured.

(4) In the presently disclosed current collecting structure for a redox flow battery,
the interposed member may comprise a mixture of a plurality of wires comprising a wire comprising the first conductive material and a wire comprising the second conductive material.

The interposed member according to (4) tends to have a small potential difference with respect to both the conductive member and the current collecting member. The interposed member according to (4) is excellent in flexibility as it has wires of different conductive materials mixed together. The interposed member excellent in flexibility easily ensures satisfactory electrical connection between the conductive member and the current collecting member.

(5) In the presently disclosed current collecting structure for a redox flow battery,
the interposed member may comprise:
   a plurality of particles comprising the first conductive material; and
   an assembly of a plurality of wires comprising the second conductive material, and
the plurality of particles may be dispersed at a surface of the assembly that comes into contact with the conductive member.

According to the configuration (5), the particles are positionally easily limited to a specific location with respect to the assembly. An appropriate material which is resistant to corrosion is easily disposed at each of the surface of the interposed member facing the conductive member and the surface of the interposed member facing the current collecting member. In particular, when the assembly has a surface which does not have particles dispersed therein and faces the current collecting member, a potential difference between the current collecting member and the interposed member can also substantially be zeroed.

(6) In the presently disclosed current collecting structure for a redox flow battery,
the interposed member may comprise:
   a plurality of particles comprising the second conductive material; and
   an assembly of a plurality of wires comprising the first conductive material, and
the plurality of particles may be dispersed at a surface of the assembly that comes into contact with the current collecting member.

According to the configuration (6), the particles are positionally easily limited to a specific location with respect to the assembly. An appropriate material which is resistant to corrosion is easily disposed at each of the surface of the interposed member facing the conductive member and the surface of the interposed member facing the current collecting member. In particular, when the assembly has a surface which does not have particles dispersed therein and faces the conductive member, a potential difference between the conductive member and the interposed member can also substantially be zeroed.

(7) In the presently disclosed current collecting structure for a redox flow battery according to (4) to (6),
at least some of the plurality of wires may be a strand comprising a plurality of elemental wires twisted together.

According to the configuration (7), when comprising a wire comprising a strand is compared with comprising a plurality of wires each comprising a single wire, the former tends to allow adjacent wires to form a smaller gap therebetween than the latter. According to the configuration (7), moisture hardly penetrates into the gap, and as a result, moisture hardly penetrates into the interposed member. According to the configuration (7), corrosion between the conductive member and the current collecting member can be suppressed more easily.

(8) In the presently disclosed current collecting structure for a redox flow battery according to (4) to (7) above,
at least some of the plurality of wires may comprise a core portion having a surface provided with a plating layer.

According to the configuration (8), selecting a material for the plating layer facilitates providing the wire with a desired characteristic, and hence providing the interposed member with a desired characteristic. For example, when the plating layer is more flexible than the core portion of the wire, such plating layers are deformed and thus contact one another in an increased area, which easily ensures that the wires closely contact one another. In addition, when the plating layer is excellent in conductivity, the wire is enhanced in conductivity. When the plating layer is excellently resistant to corrosion, the wire is enhanced in resistance to corrosion.

(9) In the presently disclosed current collecting structure for a redox flow battery according to (8) above,
a major ingredient of one of the core portion and the plating layer may be copper, and
a major ingredient of the other of the core portion and the plating layer may be nickel.

The wire that has the core portion with a major ingredient of copper and the plating layer with a major ingredient of nickel has satisfactory corrosion resistance. The wire that has the core portion with a major ingredient of nickel and the plating layer with a major ingredient of copper has satisfactory corrosion resistance.

(10) In the presently disclosed current collecting structure for a redox flow battery,
the interposed member may comprise an insulating filled portion provided in pores of the porous body, and
the filled portion may comprise a polymer material.

The configuration (10) can suppress penetration of moisture through pores of the porous body into the interposed member. Thus, according to the configuration (10), corrosion between the conductive member and the current collecting member can be suppressed more easily. When the filled portion is insulating, a material having high fluidity is easily selected. When the material having high fluidity is used, an effect by the filled portion to cover the pores of the porous body is easily enhanced, and penetration of moisture is easily suppressed. In addition, when the filled portion is insulating, a practical material is available as the polymer material that the filled portion comprises.

(11) In the presently disclosed current collecting structure for a redox flow battery,
the interposed member may comprise a conductive filled portion provided in pores of the porous body, and
the filled portion may comprise a composite material comprising a polymer material and a plurality of conductive fillers dispersed in the polymer material.

The configuration (11) can suppress penetration of moisture through the pores of the porous body into the interposed member and in addition, ensure conduction by the conductive filler. Therefore, the configuration (11) can more satisfactorily ensure electrical connection between the conductive member and the current collecting member.

(12) A redox flow battery cell according to one aspect of the present disclosure comprises
a current collecting structure for a redox flow battery according to any one of (1) to (11) above.

The presently disclosed redox flow battery cell that comprises the presently disclosed current collecting structure for a redox flow battery can suppress corrosion between the conductive member and the current collecting member by a simple configuration.

(13) A redox flow battery system according to one aspect of the present disclosure comprises
the redox flow battery cell according to (12) above.

The presently disclosed redox flow battery system that comprises the presently disclosed redox flow battery cell can suppress corrosion between the conductive member and the current collecting member by a simple configuration.

### [Detailed Description of Embodiments of the Present Disclosure]

A specific example of the presently disclosed current collecting structure for a redox flow battery, redox flow battery cell, and redox flow battery system will now be described with reference to the drawings. Hereinafter, the redox flow battery may be referred to as an "RF battery." In the figures, identical reference characters denote identical or equivalent components. Note that the present invention is defined by the terms of the claims, rather than these examples, and is intended to include any modifications within the meaning and scope equivalent to the terms of the claims.

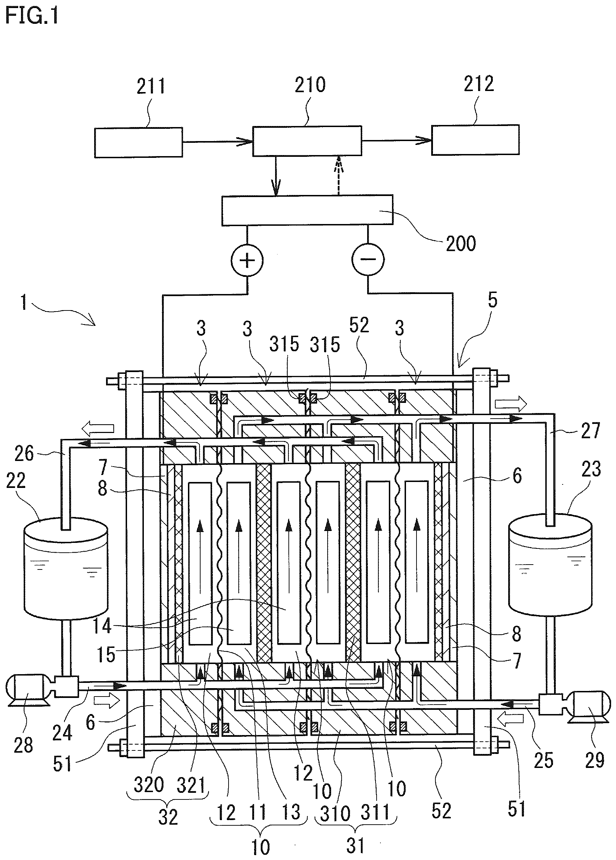

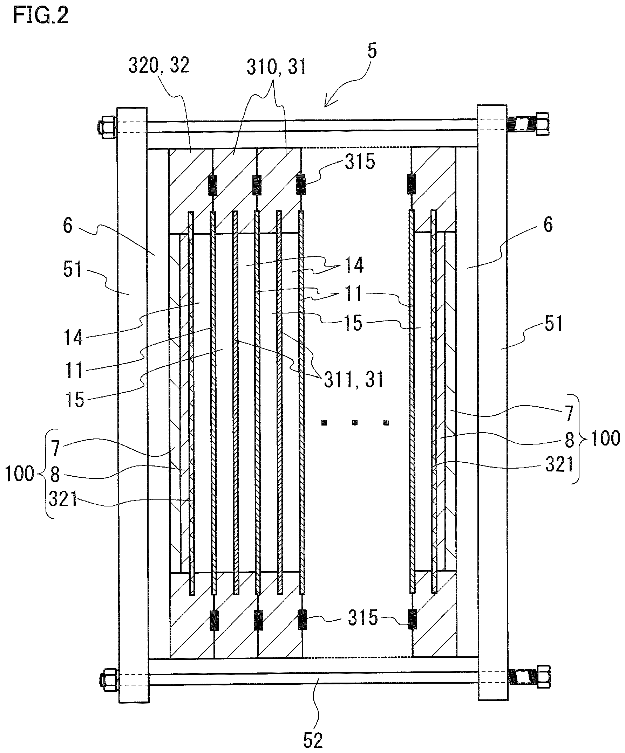

As shown in Fig. 1, RF battery system 1 according to an embodiment comprises an RF battery cell 10 according to an embodiment. One feature of RF battery system 1 and RF battery cell 10 according to the embodiment is that it comprises a current collecting structure 100 for an RF battery according to an embodiment shown in Fig. 2. Hereinafter, RF battery system 1 and RF battery cell 10 will initially be described, and subsequently, current collecting structure 100 for an RF battery will be described.

### <RF Battery System>

With reference to Fig. 1, a basic configuration of RF battery system 1 according to an embodiment will be described. RF battery system 1 is one of electrolyte circulation type storage battery systems. RF battery system 1 comprises RF battery cell 10 and a circulation mechanism for circulating an electrolytic solution through RF battery cell 10. RF battery system 1 performs charging and discharging while supplying the electrolytic solution to RF battery cell 10.

RF battery system 1 is typically connected to a power generation unit 211 and a load 212 via a transformer facility 210 and an AC/DC converter 200. RF battery system 1 is charges with power received from power generation unit 211, and discharges to a target to which the system supplies power, or load 212. Power generation unit 211 is, for example, a solar power generator, a wind power generator, or another general power plant. Load 212 is, for example, a power system or a consumer of power. RF battery system 1 is used, for example, for load leveling, voltage sag compensation, emergency power supply, or smoothing output of natural energy power generation.

### <<RF Battery Cell>>

RF battery cell 10 is separated into a positive electrode cell 12 and a negative electrode cell 13 by a membrane 11. A positive electrode 14 is incorporated in positive electrode cell 12. A positive electrolyte is supplied to positive electrode cell 12. A negative electrode 15 is incorporated in negative electrode cell 13. A negative electrolyte is supplied to negative electrode cell 13.

RF battery cell 10 is typically used in a form called a cell stack 5 in which a plurality of RF battery cells 10 are stacked. Cell stack 5 comprises: a stack body comprising a cell frame 3, positive electrode 14, membrane 11, negative electrode 15 and another cell frame 3 stacked repeatedly; two end plates 51 sandwiching the stack body; and a fastening member 52. Fastening member 52 is, for example, a long bolt or a nut. Two end plates 51 are fastened by a fastening member 52. This fastening holds the stack body in a stacked state. Cell stack 5 typically comprises a predetermined number of RF battery cells 10 as a sub-stack (not shown) and is used in the form of a plurality of sub-stacks stacked in layers.

Cell frame 3 comprises an intermediate cell frame 31 and an end cell frame 32. Intermediate cell frame 31 is disposed between adjacent RF battery cells 10 of the stack body. End cell frame 32 is disposed at opposite ends of the stack body.

Intermediate cell frame 31 comprises a frame body 310 and a bipolar plate 311. Frame body 310 is provided at an outer periphery of bipolar plate 311. Inside frame body 310, positive electrode 14 and negative electrode 15 are accommodated, with bipolar plate 311 interposed therebetween.

End cell frame 32 comprises a frame body 320 and a conductive member 321. Frame body 320 is provided at an outer periphery of conductive member 321. Conductive member 321 is a member in the form of a plate. Inside frame body 320 are accommodated positive electrode 14 or negative electrode 15, a current collecting member 7, and an interposed member 8, with conductive member 321 interposed therebetween. Interposed member 8 is disposed between conductive member 321 and current collecting member 7. Positive electrode 14 or negative electrode 15 is disposed on a first surface of conductive member 321. On a second surface of conductive member 321, positive electrode 14 and negative electrode 15 are not disposed, and interposed member 8 and current collecting member 7 are disposed. Interposed member 8 is in contact with the second surface of conductive member 321. Current collecting member 7 and interposed member 8 are plate members. Conductive member 321, current collecting member 7, and interposed member 8 will be described hereinafter.

Positive electrode 14 and negative electrode 15 with membrane 11 interposed therebetween are disposed between bipolar plates 311 of adjacent intermediate cell frames 31 and between bipolar plate 311 of intermediate cell frame 31 and conductive member 321 of end cell frame 32 to configure a single RF battery cell 10. A seal member 315 is disposed between frame bodies 310 and 320 in order to suppress leakage of the electrolytic solution from RF battery cell 10.

A supply/drainage plate 6 is disposed in the sub stack or cell stack 5 outside end cell frame 32. Supply pipes 24 and 25 and return pipes 26 and 27 of the circulation mechanism described later are connected to supply/drainage plate 6. In RF battery cell 10, a positive electrode electrolyte solution and a negative electrode electrolyte solution are circulated via supply/drainage plate 6.

### <<Circulation Mechanism>>

The circulation mechanism comprises a positive electrode circulation mechanism for circulating the positive electrolyte through positive electrode cell 12, and a negative electrode circulation mechanism for circulating the negative electrolyte through negative electrode cell 13. The positive electrode circulation mechanism comprises a positive electrolyte tank 22, a supply pipe 24, a return pipe 26, and a pump 28. The positive electrolyte is stored in positive electrolyte tank 22. Supply pipe 24 and return pipe 26 interconnect positive electrolyte tank 22 and positive electrode cell 12. Pump 28 is provided on the supply side at supply pipe 24. The negative electrode circulation mechanism comprises a negative electrolyte tank 23, supply pipe 25, return pipe 27, and a pump 29. The negative electrolyte is stored in negative electrolyte tank 23. Supply pipe 25 and return pipe 27 interconnect negative electrolyte tank 23 and negative electrode cell 13. Pump 29 is provided on the supply side at supply pipe 25.

The positive electrolyte is supplied from positive electrolyte tank 22 through supply pipe 24 to positive electrode cell 12, and returned from positive electrode cell 12 through return pipe 26 to positive electrolyte tank 22. The negative electrolyte is supplied from negative electrolyte tank 23 through supply pipe 25 to negative electrode cell 13, and returned from negative electrode cell 13 through return pipe 27 to negative electrolyte tank 23. By circulating the positive electrolyte through positive electrode cell 12 and circulating the negative electrolyte through negative electrode cell 13, charging and discharging are performed in response to a valence change reaction of active material ions in the electrolytic solution of each electrode.

The positive electrolyte and the negative electrolyte are solutions containing active material ions. The active material ion is an ion functioning as an active material. The active material ion is typically a metal ion having a valence changing through oxidoreduction. The active material ion is, for example, an ion of an element selected from the group consisting of manganese, vanadium, iron, chromium, titanium, and zinc.

### <Current Collecting Structure for RF Battery>

With reference to Figs. 2 to 9, current collecting structure 100 for an RF battery according to an embodiment will be described. Fig. 2 is a simplified schematic view of cell stack 5 shown in Fig. 1. As shown in Fig. 2, current collecting structure 100 for an RF battery comprises conductive member 321, interposed member 8, and current collecting member 7 sequentially stacked on one surface of positive electrode 14 or negative electrode 15. One feature of current collecting structure 100 for an RF battery according to an embodiment is a constituent material of interposed member 8. Hereinafter, each constituent will be described in detail.

### <<Conductive Member>>

Conductive member 321 has a surface in contact with positive electrode 14 or negative electrode 15. Conductive member 321 located on the left side of the sheet of Fig. 2 has a surface on the right side of the sheet of Fig. 2 in contact with positive electrode 14. Conductive member 321 located on the right side of the sheet of Fig. 2 has a surface on the left side of the sheet of Fig. 2 in contact with negative electrode 15.

Conductive member 321 comprises a conductive material. Conductive member 321 preferably has corrosion resistance and flexibility. For example, conductive member 321 consists of a conductive material. Conductive member 321 may comprise a composite material comprising a conductive material and an insulating material. A major ingredient of the conductive material that conductive member 321 comprises is preferably carbon. The carbon is graphite, carbon black, or diamond-like carbon for example. The carbon contained in conductive member 321 is in the form for example of powder or fiber. When a major ingredient of the conductive material is carbon, this means that the conductive material has a carbon content of more than 50% by mass. The conductive material has a carbon content preferably of 70% by mass or more, 80% by mass or more, 90% by mass or more, and 100% by mass in particular. Conductive member 321 generally comprises the above-described composite material. A representative example of the insulating material is resin. The resin is, for example, thermoplastic resin. Examples of the thermoplastic resin are, for example, polyethylene (PE), polypropylene (PP), polytetrafluoroethylene (PTFE), perfluoroalkoxyalkane (PFA), perfluoroethylene propene copolymer (FEP), and polyphenylene sulfide (PPS). When conductive member 321 comprises the composite material, the proportion of the conductive material in the composite material is, for example, 40% by mass or more and 90% by mass or less. Conductive member 321 in this example comprises the same material as bipolar plate 311. Conductive member 321 in this example is a conductive plastic containing graphite. Conductive member 321 may be different from a constituent material of bipolar plate 311.

### <<Current Collecting Member>>

Current collecting member 7 inputs and outputs electricity between cell stack 5 and an external device (not shown). Current collecting member 7 is electrically connected to conductive member 321. Current collecting member 7 is pressed toward conductive member 321 by fastening by fastening member 52. In Fig. 2, for convenience of illustration, an electric lead wire connected to current collecting member 7 is not shown.

Current collecting member 7 comprises a conductive material. Current collecting member 7 comprises metal for example. The metal is, for example, at least one metal selected from the group consisting of chromium, aluminum, tin, nickel, copper, silver, titanium, gold, platinum, zinc, iron, and lead, or an alloy thereof. A major ingredient of current collecting member 7 is preferably copper or nickel. When a major ingredient of current collecting member 7 is copper, this means that current collecting member 7 comprises material with a copper content of more than 50% by mass. Current collecting member 7 comprises material with a copper content preferably of 70% by mass or more, 80% by mass or more, 90% by mass or more, and 100% by mass in particular. When a major ingredient of current collecting member 7 is nickel, this means that that current collecting member 7 comprises material with a nickel content of more than 50% by mass. Current collecting member 7 comprises material with a nickel content preferably of 70% by mass or more, 80% by mass or more, 90% by mass or more, and 100% by mass in particular. Current collecting member 7 preferably comprises pure copper, copper alloy, pure nickel, or nickel alloy. When a major ingredient of current collecting member 7 is copper or nickel, current collecting member 7 having high conductivity and high strength can be obtained. Current collecting member 7 in this example comprises pure copper.

### <<Interposed Member>>

Interposed member 8 is disposed between conductive member 321 and current collecting member 7. Interposed member 8 is mainly provided in order to ensure electrical connection between conductive member 321 and current collecting member 7 even when pressure inside cell stack 5 varies. Interposed member 8 has deformability to maintain satisfactory electrical connection between conductive member 321 and current collecting member 7. This deformability means that even when pressure inside cell stack 5 varies and accordingly, a distance between conductive member 321 and current collecting member 7 varies, interposed member 8 has elasticity allowing deformation to maintain contact between interposed member 8 and conductive member 321 and maintain contact between interposed member 8 and current collecting member 7.

Interposed member 8 is a porous body comprising a composite material comprising a first conductive material and a second conductive material. Interposed member 8 has a skeleton of a three-dimensional network structure comprising a conductive material. The porous body is, for example, a mesh, a woven matter, a knitted matter, nonwoven fabric, or a porous metal body. Interposed member 8 can also comprise two or more of the mesh, the woven matter, the knitted matter, the nonwoven fabric, and the porous metal body in combination. Interposed member 8 ensures the deformability mainly by the porous body's pores or a constituent material's elasticity.

One feature of current collecting structure 100 for an RF battery according to an embodiment is that the standard electrode potential of the first conductive material and the standard electrode potential of the second conductive material satisfy a specific condition. The standard electrode potential of the first conductive material is closer to the standard electrode potential of conductive member 321 than the standard electrode potential of current collecting member 7. The standard electrode potential of the second conductive material is closer to the standard electrode potential of current collecting member 7 than the standard electrode potential of conductive member 321.

The first conductive material and the second conductive material are different from each other. Hereinafter, an intermediate value between the standard electrode potential of conductive member 321 and the standard electrode potential of current collecting member 7 will simply be referred to as an intermediate value. When the standard electrode potential of the first conductive material is closer to the standard electrode potential of conductive member 321 than the standard electrode potential of current collecting member 7, this means that a potential difference between the standard electrode potential of the first conductive material and the standard electrode potential of conductive member 321 is smaller than a potential difference between the standard electrode potential of the first conductive material and the standard electrode potential of current collecting member 7. In other words, the potential difference between the standard electrode potential of the first conductive material and the standard electrode potential of conductive member 321 is smaller than a potential difference between the intermediate value and the standard electrode potential of conductive member 321. For example, when the standard electrode potential of conductive member 321 is smaller than the standard electrode potential of current collecting member 7, the standard electrode potential of the first conductive material is smaller than the intermediate value.

When the standard electrode potential of the second conductive material is closer to the standard electrode potential of current collecting member 7 than the standard electrode potential of conductive member 321, this means that a potential difference between the standard electrode potential of the second conductive material and the standard electrode potential of current collecting member 7 is smaller than a potential difference between the standard electrode potential of the second conductive material and the standard electrode potential of conductive member 321. In other words, the potential difference between the standard electrode potential of the second conductive material and the standard electrode potential of current collecting member 7 is smaller than a potential difference between the intermediate value and the standard electrode potential of current collecting member 7. For example, when the standard electrode potential of current collecting member 7 is larger than the standard electrode potential of conductive member 321, the standard electrode potential of the second conductive material is larger than the intermediate value.

When the standard electrode potentials of the first and second conductive materials satisfy the specific condition, conductive member 321 and interposed member 8 have a small potential difference, and current collecting member 7 and interposed member 8 have a small potential difference. For example, conductive member 321 and interposed member 8 have a potential difference of 0.35 V or less, furthermore, 0.30 V or less, and 0.20 V or less in particular. Current collecting member 7 and interposed member 8 also have a potential difference for example of 0.35 V or less, furthermore, 0.30 V or less, and 0.20 V or less in particular. As referred to herein, a potential difference is a potential difference between the standard electrode potential of conductive member 321 and the standard electrode potential of interposed member 8, or a potential difference between the standard electrode potential of current collecting member 7 and the standard electrode potential of interposed member 8.

As referred to herein, a standard electrode potential is a potential with respect to a standard hydrogen electrode in artificial seawater defined in JIS Z 0103:1996. An example of a standard electrode potential in artificial seawater is indicated below:
- Chromium: about - 0.91 V to about - 0.74 V
- Aluminum 1100: about - 0.74 V to about - 0.72 V
- Tin: about - 0.58 V
- Nickel: about - 0.22 V to about - 0.17 V
- Copper: about - 0.22 V
- Silver: about - 0.18 V to about - 0.14 V
- Titanium: about - 0.18 V to about - 0.16 V
- Stainless steel: about - 0.17 V to about - 0.12 V
- Gold: about 0.08 V to about 0.12 V
- Platinum: about 0.18 V to about 0.24 V
- Zinc: about - 1.0 V
- Iron: - 0.58 V
- Lead: - 0.55 V
- Carbon (graphite): about 0.26 V to about 0.32 V

The first conductive material is, for example, a material of the same type of material as a conductive material in a constituent material of conductive member 321. Being the same type as a conductive material in a constituent material means that the largest ingredient of the conductive material is the same. In general, a major ingredient of a conductive material that conductive member 321 comprises is carbon. Accordingly, a major ingredient of the first conductive material is carbon. The first conductive material may contain a metal other than carbon as a major ingredient insofar as the specific condition is satisfied. In that case, a material allowing conductive member 321 and interposed member 8 to have a potential difference of 0.35 V or less may be selected as the first conductive material.

The second conductive material is, for example, the same type of material as a conductive material in a constituent material of current collecting member 7. The constituent material of current collecting member 7 is metal, as has been described above. Accordingly, a constituent metal of the second conductive material and a constituent metal of current collecting member 7 are of the same type. The same type of metal means that the largest ingredient in the ingredient composition comprises the same metal, and comprises metals having different ingredient compositions. For example, a pure metal and an alloy containing that pure metal as a major ingredient are regarded as the same metal. Even alloys having different additive elements are regarded as the same metal insofar as the alloys have the same metallic element as a major ingredient.

When a major ingredient of current collecting member 7 is copper, a major ingredient of the second conductive material is copper or nickel, for example. When a major ingredient of current collecting member 7 is copper, a major ingredient of the second conductive material is preferably copper. When a major ingredient of current collecting member 7 is nickel, a major ingredient of the second conductive material is copper or nickel, for example. When a major ingredient of current collecting member 7 is nickel, a major ingredient of the second conductive material is preferably nickel. When the second conductive material and a constituent material of current collecting member 7 are of the same type, current collecting member 7 and interposed member 8 tend to have a small potential difference. The constituent metal of the second conductive material may be different from the constituent metal of current collecting member 7 insofar as the specific condition is satisfied. In that case, a material allowing current collecting member 7 and interposed member 8 to have a potential difference of 0.35 V or less may be selected as the second conductive material.

Interposed member 8 comprises an embodiment comprising wire or an embodiment comprising particles, for example. Hereinafter, three specific embodiments will be described.

### [Embodiment 1]

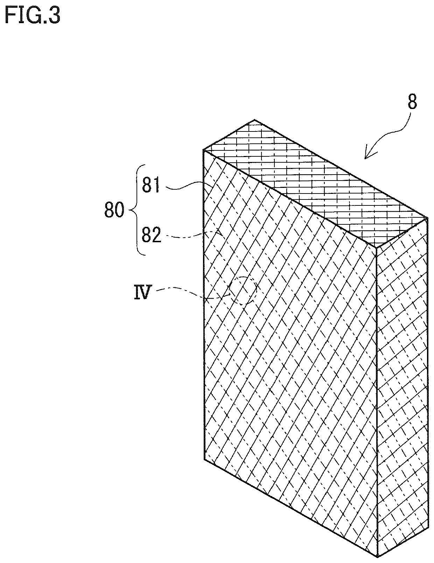

As shown in Fig. 3, a first embodiment of interposed member 8 comprises a plurality of wires comprising a first wire 81 and a second wire 82 mixed together. For the first embodiment of interposed member 8, an assembly 80 of the plurality of wires mixed together serves as a skeleton of the porous body. First wire 81 comprises the first conductive material. Second wire 82 comprises the second conductive material. The first embodiment of interposed member 8 comprises a woven matter of first wire member 81 and second wire 82 disposed alternately. In Fig. 3, for easy understanding, first wire 81 is indicated by a solid line, and second wire 82 is indicated by a double-dotted line. This also applies to the other drawings.

Conductive member 321 comes into contact with both first wire 81 and second wire 82. The first conductive material that first wire 81 comprises has a standard electrode potential closer to conductive member 321 than the second conductive material that second wire 82 comprises. Therefore, a potential difference between conductive member 321 and first wire 81 is smaller than a potential difference between conductive member 321 and second wire 82. When conductive member 321 in contact with both first wire 81 and second wire 82 is compared with conductive member 321 in contact with second wire 82 alone, the former reduces portions prone to corrosion and thus suppresses corrosion.

Current collecting member 7 comes into contact with both first wire 81 and second wire 82. The second conductive material that second wire 82 comprises has a standard electrode potential closer to current collecting member 7 than the first conductive material that first wire 81 comprises. When current collecting member 7 being in contact with both first wire 81 and second wire 82 is compared with current collecting member 7 being in contact with first wire 81 alone, the former reduces portions prone to corrosion and thus suppresses corrosion.

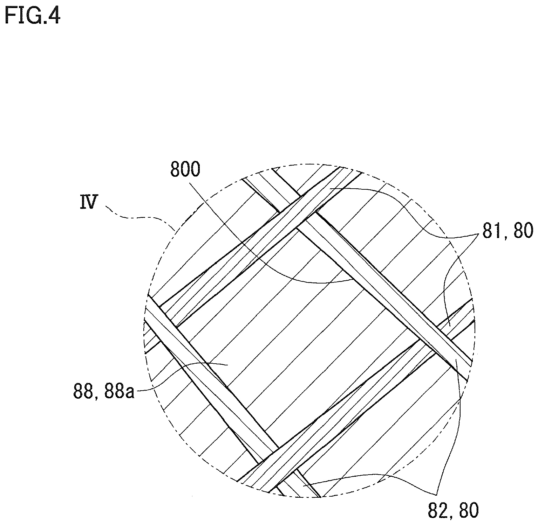

The first embodiment of interposed member 8, as shown in Fig. 4, has a pore 800 formed by first wire 81 and second wire 82. Fig. 4 is an enlarged schematic cross section of an area inside a circle enclosed by a dashed line IV indicated in Fig. 3. Pore 800 in this example is provided with a filled portion 88. Filled portion 88 is provided to prevent moisture entering between conductive member 321 and current collecting member 7 from penetrating into interposed member 8. Filled portion 88 shown in Fig. 4 comprises a polymer material 88a. Polymer material 88a is, for example, resin, rubber, or gel. Polymer material 88a in this example is resin. The resin is, for example, the same as a constituent resin of conductive member 321. Filled portion 88 shown in Fig. 4 is insulating.

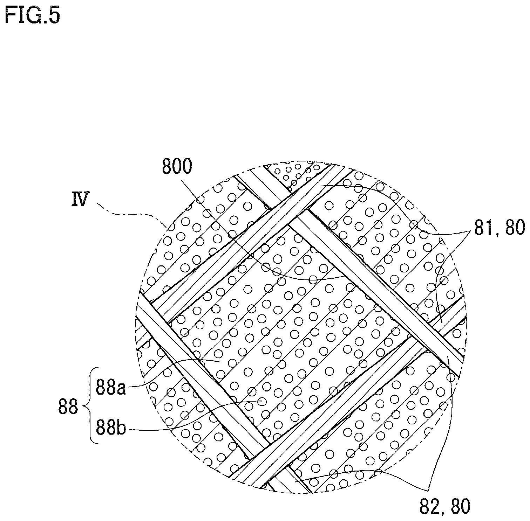

As shown in Fig. 5, filled portion 88 may comprise a composite material comprising polymer material 88a and a plurality of conductive fillers 88b dispersed in polymer material 88a. As well as Fig. 4, Fig. 5 is an enlarged schematic cross section of an area inside a circle enclosed by a dashed line IV indicated in Fig. 3. In Fig. 5, conductive filler 88b is not hatched. A constituent metal of conductive filler 88b is, for example, the same as a constituent metal of current collecting member 7. Conductive filler 88b is shaped to be a granule, a flake or a short fiber, for example. Conductive filler 88b in this example is mainly granular. As conductive fillers 88b are dispersed, filled portion 88 shown in Fig. 5 is conductive.

Filled portion 88 is implemented, for example, by spraying polymer material 88a in a form of liquid or a liquid of a mixture of polymer material 88a in the form of liquid and the plurality of conductive fillers 88b dispersed in polymer material 88a in the form of liquid to assembly 80. By the spraying, polymer material 88a in the form of liquid enters pore 800. Subsequently, polymer material 88a in the form of liquid is solidified to provide filled portion 88 in pore 800. That is, there exists pore 800 filled with filled portion 88.

### [Embodiment 2]

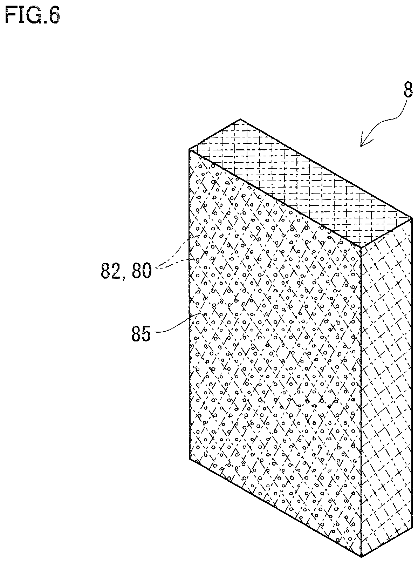

As shown in Fig. 6, a second embodiment of interposed member 8 comprises assembly 80 and a plurality of first particles 85. Assembly 80 comprises a plurality of second wires 82. In the second embodiment of interposed member 8, assembly 80 of the plurality of second wires 82 serves as a skeleton of the porous body. First particles 85 are dispersed at a surface of assembly 80 that comes into contact with conductive member 321. For example, first particles 85 are embedded in pores between the plurality of second wires 82 that assembly 80 comprises, and thus adhere to assembly 80. First particles 85 may be bound to assembly 80 by a binder (not shown). A constituent material of the binder is, for example, the same as a constituent resin of conductive member 321. A constituent material of the binder is preferably PE or PP. It is preferable that nothing be disposed at a surface of assembly 80 that comes into contact with current collecting member 7 and the surface comprise second wire 82. First particle 85 comprises the first conductive material. Second wire 82 comprises the second conductive material.

Conductive member 321 mainly comes into contact first particles 85. Conductive member 321 can also come into contact with second wire 82. The first conductive material that first particle 85 comprises has a standard electrode potential closer to conductive member 321 than the second conductive material that second wire 82 comprises. When conductive member 321 mainly coming into contact with first particles 85 in spots is compared with conductive member 321 coming into contact with second wire 82 alone, the former reduces portions prone to corrosion and thus suppresses corrosion.

Current collecting member 7 mainly comes into contact with second wire 82. Current collecting member 7 in this example comes into contact with second wire 82 alone. As second wire 82 comprises the second conductive material, current collecting member 7 and interposed member 8 have a small potential difference. When the second conductive material is the same as a constituent metal of current collecting member 7, the potential difference between current collecting member 7 and interposed member 8 will substantially be zeroed.

In the second embodiment of interposed member 8, pores are formed between the plurality of second wires 82 that assembly 80 comprises. As well as the first embodiment of interposed member 8, the second embodiment of interposed member 8 may also have pores provided with filled portion 88 shown in Figs. 4 and 5.

### [Embodiment 3]

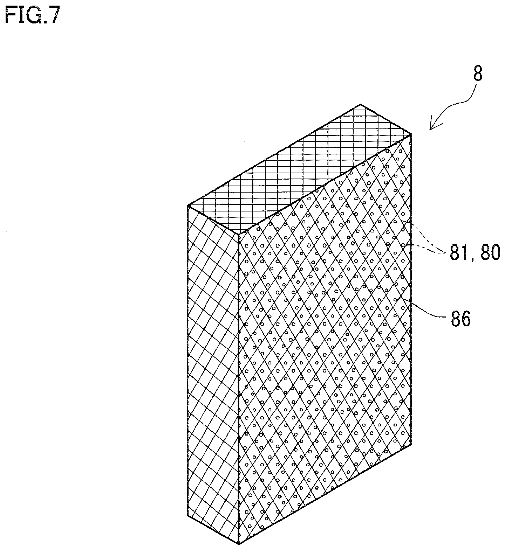

As shown in Fig. 7, a third embodiment of interposed member 8 comprises an assembly 80 and a plurality of second particles 86. Assembly 80 comprises a plurality of first wires 81. In the third embodiment of interposed member 8, assembly 80 of the plurality of first wires 81 serves as a skeleton of the porous body. Second particles 86 are dispersed at a surface of assembly 80 that comes into contact with current collecting member 7. For example, second particles 86 are embedded in the pores between the plurality of first wires 81 that assembly 80 comprises and thus adhere to assembly 80. Second particles 86 may be bound to assembly 80 by a binder (not shown). The binder is the same as the binder in the second embodiment. It is preferable that nothing is disposed at a surface of assembly 80 that comes into contact with conductive member 321 and the surface comprise first wire 81. Second particles 86 comprise the second conductive material. First wire 81 comprises the first conductive material.

Conductive member 321 mainly comes into contact with first wire 81. Conductive member 321 in this example comes into contact with first wire 81 alone. As first wire 81 comprises the first conductive material, conductive member 321 and interposed member 8 have a small potential difference. As has been described above, conductive member 321 generally contains carbon as a conductive material. When the first conductive material comprises carbon, the potential difference between conductive member 321 and interposed member 8 will substantially be zeroed.

Current collecting member 7 mainly comes into contact with second particles 86. Current collecting member 7 can also come into contact with first wire 81. The second conductive material that second particle 86 comprises has a standard electrode potential closer to current collecting member 7 than the first conductive material that first wire 81 comprises. When current collecting member 7 mainly coming into contact with second particles 86 in spots is compared with current collecting member 7 coming into contact with first wire 81 alone, the former reduces portions prone to corrosion and thus suppresses corrosion.

In the third embodiment of interposed member 8, pores are formed between the plurality of first wires 81 that assembly 80 comprises. As well as the first embodiment of interposed member 8, the third embodiment of interposed member 8 may also have pores provided with filled portion 88 shown in Figs. 4 and 5.

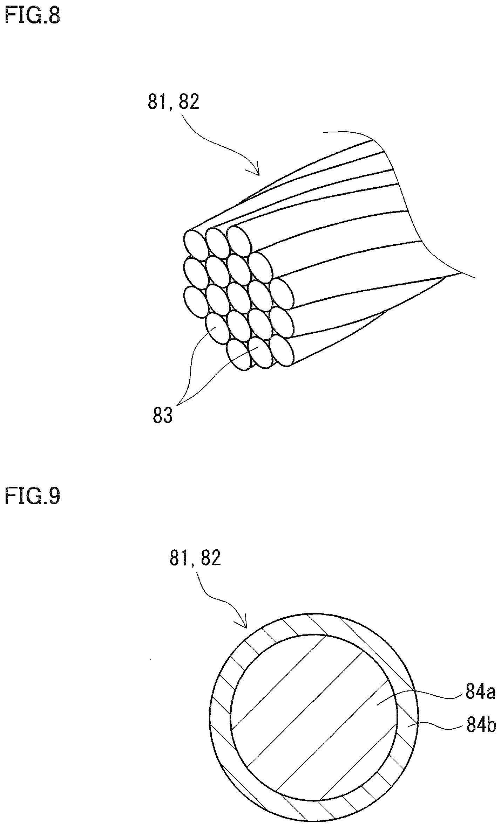

In the first to third embodiments of interposed member 8, at least some of the plurality of wires that assembly 80 comprises may be a strand comprising a plurality of elemental wires 83 twisted together, as shown in Fig. 8. In the first embodiment of interposed member 8, the plurality of wires are the plurality of first wires 81 and the plurality of second wires 82. In the second embodiment of interposed member 8, the plurality of wires are the plurality of second wires 82. In the third embodiment of interposed member 8, the plurality of wires are the plurality of first wires 81. In first wire 81, each elemental wire 83 comprises the first conductive material. In second wire 82, each elemental wire 83 comprises the second conductive material. The number, twisting pitch, etc. of elemental wires 83 for each wire can be selected, as appropriate.

In the first to third embodiments of interposed member 8, at least some of the plurality of wires that assembly 80 comprises may comprise a core portion 84a having a surface provided with a plating layer 84b, as shown in Fig. 9. In the first embodiment of interposed member 8, the plurality of wires are the plurality of first wires 81 and the plurality of second wires 82. In the second embodiment of interposed member 8, the plurality of wires are the plurality of second wires 82. In the third embodiment of interposed member 8, the plurality of wires are the plurality of first wires 81. For first wire 81, plating layer 84b comprises the first conductive material. For second wire 82, plating layer 84b comprises the second conductive material. For example, for second wire 82, when a major ingredient of core portion 84a is copper, a major ingredient of plating layer 84b is nickel. For second wire 82, when a major ingredient of core portion 84a is nickel, a major ingredient of plating layer 84b is copper. Plating layer 84b can be selected in thickness, as appropriate.

In the first to third embodiments of interposed member 8 described above, at least some of the plurality of wires that assembly 80 comprises may be a strand comprising elemental wires that each comprise a core portion without a plating layer and are twisted together. At least some of the plurality of wires may be a strand comprising elemental wires comprising plating layer 84b shown in Fig. 9, and twisted together. At least some of the plurality of wires may be a composite strand obtained by twisting together an elemental wire comprising a core portion without a plating layer and an elemental wire comprising plating layer 84b shown in Fig. 9.

Current collecting structure 100 for an RF battery according to an embodiment that comprises interposed member 8 comprising a first conductive material and a second conductive material each having a specific potential allows conductive member 321 and interposed member 8 to have a reduced potential difference and current collecting member 7 and interposed member 8 to have a reduced potential difference. Specifically, conductive member 321 and interposed member 8 have a potential difference of 0.35 V or less, and so do current collecting member 7 and interposed member 8. The small potential difference allows resistance to corrosion even if moisture should penetrate between conductive member 321 and interposed member 8 and between current collecting member 7 and interposed member 8.

When an embodiment of interposed member 8 comprises assembly 80 comprising a plurality of wires comprising first wire 81 and second wire 82 mixed together, alternately disposing first wire 81 and second wire 82 easily reduces the potential difference. In particular, when interposed member 8 comprises assembly 80 comprising second wire 82, and first particles 85, current collecting member 7 can be brought into contact with second wire 82 alone, and the potential difference between current collecting member 7 and interposed member 8 can also be substantially zeroed. Similarly, when interposed member 8 comprises assembly 80 comprising first wire 81, and second particles 86, conductive member 321 can be brought into contact with first wire 81 alone, and the potential difference between conductive member 321 and interposed member 8 can also be substantially zeroed.

By providing filled portion 88 in pores 800 of the porous body that interposed member 8 comprises, even when moisture penetrates between conductive member 321 and current collecting member 7, the moisture can be prevented from penetrating into interposed member 8. When a plurality of conductive fillers 88b are dispersed in filled portion 88, conduction by filled portion 88 can also be ensured.

For current collecting structure 100 for an RF battery according to an embodiment, conductive member 321 and current collecting member 7 are known such members. Current collecting structure 100 for an RF battery according to the embodiment can thus suppress corrosion between conductive member 321 and current collecting member 7 by a simple configuration.

RF battery cell 10 and RF battery system 1 according to an embodiment comprising current collecting structure 100 for an RF battery according to an embodiment can suppress corrosion between conductive member 321 and current collecting member 7 and can suppress an increase in contact resistance between conductive member 321 and current collecting member 7. RF battery cell 10 and RF battery system 1 according to the embodiment can thus steadily maintain battery performance over a long period of time.

### REFERENCE SIGNS LIST

1 redox flow battery system (RF battery system)
10 redox flow battery cell (RF battery cell)
100 current collecting structure for redox flow battery (current collecting structure for RF battery)
11 membrane
12 positive electrode cell, 13 negative electrode cell
14 positive electrode, 15 negative electrode
22 positive electrolyte tank, 23 negative electrolyte tank
24 and 25 supply pipe, 26 and 27 return pipe
28 and 29 pump
3 cell frame
31 intermediate cell frame, 310 frame body, 311 bipolar plate, 315 seal member
32 end cell frame, 320 frame body, 321 conductive member
5 cell stack, 51 end plate, 52 fastening member
6 supply/drainage plate
7 current collecting member
8 interposed member
80 assembly, 800 pore
81 first wire, 82 second wire, 83 elemental wire, 84a core portion, 84b plating layer
85 first particle, 86 second particle
88 filled portion, 88a polymer material, 88b conductive filler
200 AC/DC converter, 210 transformer facility, 211 power generation unit, 212 load

## Claims

1. A current collecting structure for a redox flow battery that comprises a conductive member, an interposed member, and a current collecting member sequentially stacked on one surface of a positive electrode or a negative electrode, wherein
the interposed member is a porous body comprising a composite material comprising a first conductive material and a second conductive material, and
a standard electrode potential of the first conductive material is closer to a standard electrode potential of the conductive member than a standard electrode potential of the current collecting member and
a standard electrode potential of the second conductive material is closer to the standard electrode potential of the current collecting member than the standard electrode potential of the conductive member.

2. The current collecting structure for a redox flow battery according to claim 1, wherein
a major ingredient of a conductive material that the conductive member comprises is carbon, and
a major ingredient of the current collecting member is copper or nickel.

3. The current collecting structure for a redox flow battery according to claim 2, wherein
a major ingredient of the first conductive material is carbon and
a major ingredient of the second conductive material is copper or nickel.

4. The current collecting structure for a redox flow battery according to any one of claims 1 to 3, wherein the interposed member comprises a mixture of a plurality of wires comprising a wire comprising the first conductive material and a wire comprising the second conductive material.

5. The current collecting structure for a redox flow battery according to any one of claims 1 to 3, wherein
the interposed member comprises:
a plurality of particles comprising the first conductive material; and
an assembly of a plurality of wires comprising the second conductive material, and
the plurality of particles are dispersed at a surface of the assembly that comes into contact with the conductive member.

6. The current collecting structure for a redox flow battery according to any one of claims 1 to 3, wherein
the interposed member comprises:
a plurality of particles comprising the second conductive material; and
an assembly of a plurality of wires comprising the first conductive material, and
the plurality of particles are dispersed at a surface of the assembly that comes into contact with the current collecting member.

7. The current collecting structure for a redox flow battery according to any one of claims 4 to 6, wherein at least some of the plurality of wires is a strand comprising a plurality of elemental wires twisted together.

8. The current collecting structure for a redox flow battery according to any one of claims 4 to 7, wherein at least some of the plurality of wires comprise a core portion having a surface provided with a plating layer.

9. The current collecting structure for a redox flow battery according to claim 8, wherein
a major ingredient of one of the core portion and the plating layer is copper, and
a major ingredient of the other of the core portion and the plating layer is nickel.

10. The current collecting structure for a redox flow battery according to any one of claims 1 to 9, wherein
the interposed member comprises an insulating filled portion provided in pores of the porous body, and
the filled portion comprises a polymer material.

11. The current collecting structure for a redox flow battery according to any one of claims 1 to 9, wherein
the interposed member comprises a conductive filled portion provided in pores of the porous body, and
the filled portion comprises a composite material comprising a polymer material and a plurality of conductive fillers dispersed in the polymer material.

12. A redox flow battery cell comprising a current collecting structure for a redox flow battery according to any one of claims 1 to 11.

13. A redox flow battery system comprising the redox flow battery cell according to claim 12.
